(19) **Europäisches Patentamt / European Patent Office / Office européen des brevets**

(11) **EP 4 693 934 A1**

(12) **EUROPEAN PATENT APPLICATION**
published in accordance with Art. 153(4) EPC

(43) Date of publication:
**11.02.2026 Bulletin 2026/07**

(21) Application number: **24733483.2**

(22) Date of filing: **11.03.2024**

(51) International Patent Classification (IPC):
$H04B\ 7/06^{(2006.01)}$ $H04W\ 8/24^{(2009.01)}$
$H04W\ 24/08^{(2009.01)}$ $H04W\ 36/08^{(2009.01)}$
$H04W\ 36/00^{(2009.01)}$ $H04W\ 48/20^{(2009.01)}$
$H04W\ 64/00^{(2009.01)}$ $H04W\ 84/06^{(2009.01)}$

(52) Cooperative Patent Classification (CPC):
H04B 7/06; H04W 8/24; H04W 24/08; H04W 36/00;
H04W 36/08; H04W 48/20; H04W 64/00;
H04W 84/06

(86) International application number:
**PCT/KR2024/003083**

(87) International publication number:
**WO 2024/205074 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 US 202363455573 P
07.04.2023 US 202363457802 P**

(71) Applicant: **LG Electronics Inc.
Seoul 07336 (KR)**

(72) Inventors:
• **HWANG, Jinyup
Seoul 06772 (KR)**

• **PARK, Jinwoong
Seoul 06772 (KR)**
• **YANG, Yoonoh
Seoul 06772 (KR)**
• **LEE, Sangwook
Seoul 06772 (KR)**
• **HUH, Joongkwan
Seoul 06772 (KR)**
• **NA, Yunsik
Seoul 06772 (KR)**

(74) Representative: **Maikowski & Ninnemann
Patentanwälte Partnerschaft mbB
Postfach 15 09 20
10671 Berlin (DE)**

(54) **BEAM MANAGEMENT METHOD**

(57) One disclosure of the present disclosure provides a method by which UE performs communication. The method comprises the steps of: transmitting, to a serving base station, capability of the UE; wherein the capability includes information that an antenna of the UE is a directional antenna, receiving, from the serving base station, information on location of a specific base station; determining N candidate beams, based on the location of the specific base station; performing beam sweeping on the N candidate beams.

FIG. 16

1. transmitting, to a serving base station, capability of the UE

2. receiving, from the serving base station, information on location of a specific base station

3. determining N candidate beams, based on the location of the specific base station

4. performing beam sweeping on the N candidate beams

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

If the terminal in an NTN or ATG environment supports beamforming, an efficient beam sweeping method is required.

### DESCLOSURE

### TECHNICAL SOLUTION

The approximate beam direction is determined based on the location of the base station or satellite, and beam sweeping is performed based on the approximate beam direction.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a diagram showing an example of a communication structure that can be provided in a 6G system.
FIG. 5 shows an example of an electromagnetic spectrum.
FIG. 6 shows an example of subframe types in NR.
FIG. 7 is an exemplary diagram illustrating an example of an SS block in NR.
FIG. 8 is an exemplary diagram illustrating an example of beam sweeping in NR.
FIG. 9 is an example diagram showing an NTN scenario based on a transmissive payload.
FIG. 10 is an example diagram showing an NTN scenario based on a regenerative payload.
FIG. 11 shows an example of a networking RAN architecture based on transparent satellites.
FIG. 12 shows an example of an architecture based on a regenerative satellite without ISL.
FIG. 13 shows an example of an architecture based on regenerative satellites with ISL.
FIG. 14 illustrates an example of beam tracking in accordance with embodiments of the present specification.
FIG. 15 shows an example of beam steering in an ATG environment according to embodiments of the present specification.
FIG. 16 shows the procedure of the UE according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

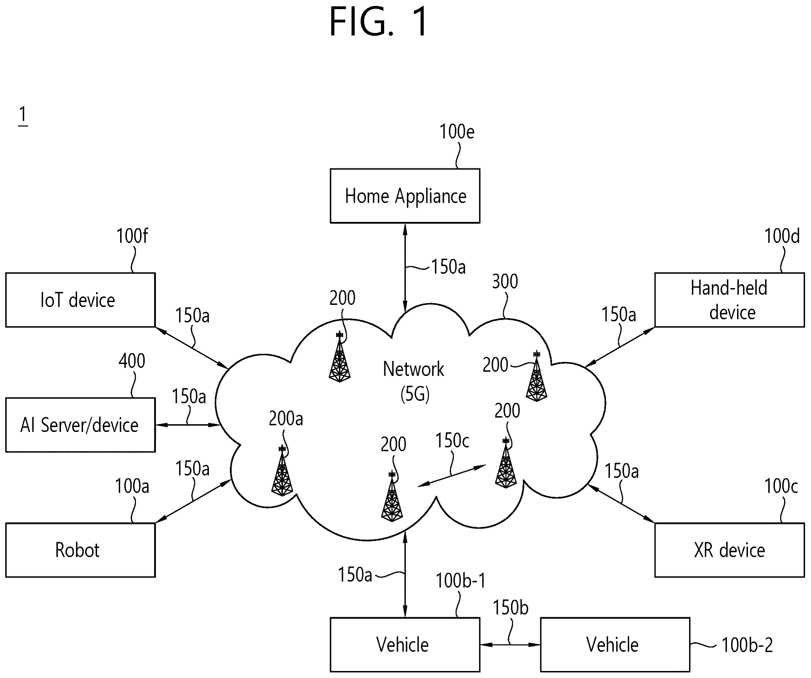

**FIG. 1 shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

[Table 1]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

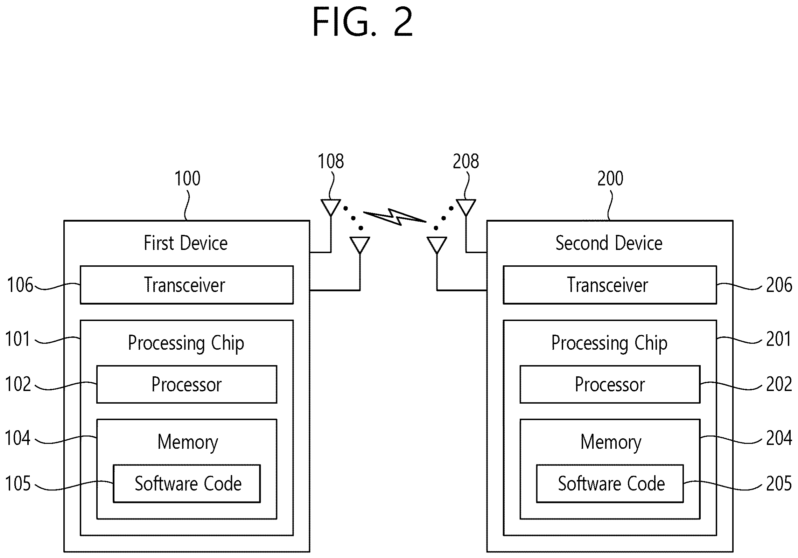

**FIG. 2 shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

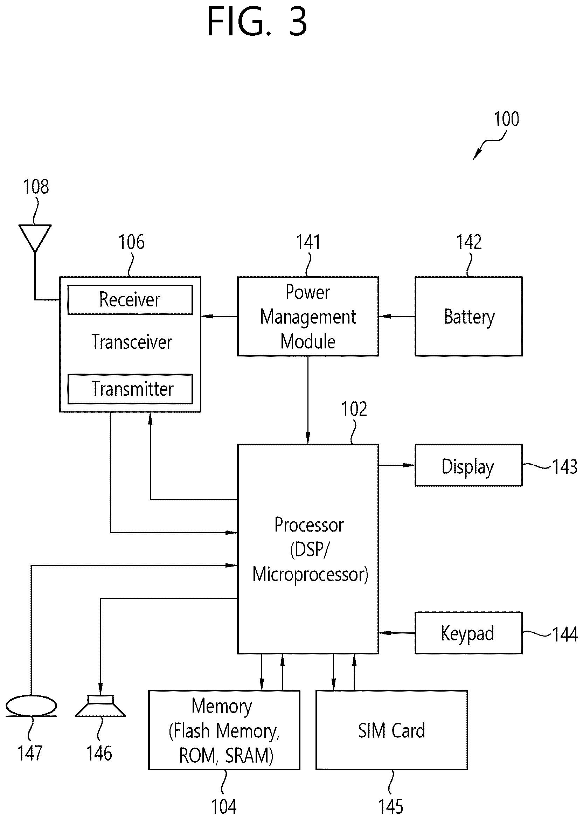

**FIG. 3 shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel® or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

## <6G System General>

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 3 below. That is, Table 3 shows the requirements of the 6G system.

[Table 3]

| Per device peak data rate | 1 Tbps |
| --- | --- |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

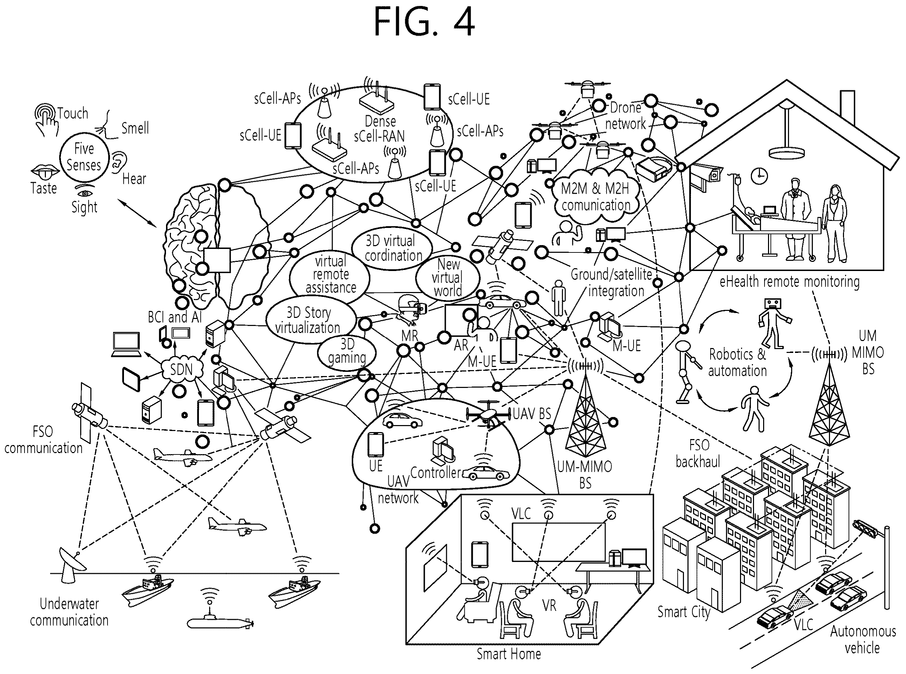

**FIG. 4 is a diagram showing an example of a communication structure that can be provided in a 6G system.**

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.

- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

### <Core implementation technology of 6G system>

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

Machine learning refers to a series of operations to train a machine in order to create a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method, a recurrent Boltzmman machine (RNN) method and a spiking neural networks (SNN). Such a learning model is applicable.

THz (Terahertz) Communication

A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

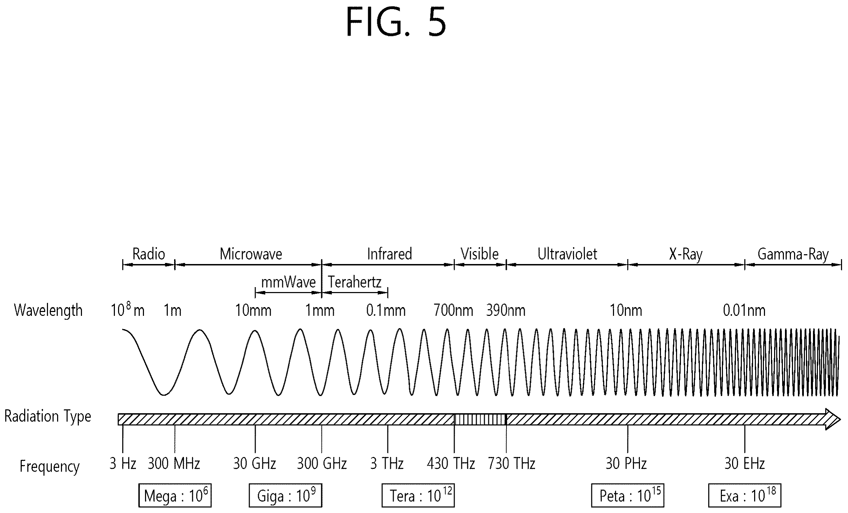

**FIG. 5 shows an example of an electromagnetic spectrum.**

The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

Large-scale MIMO

One of core technologies for improving spectrum efficiency is MIMO technology. When MIMO technology is improved, spectrum efficiency is also improved. Accordingly, massive MIMO technology will be important in the 6G system. Since MIMO technology uses multiple paths, multiplexing technology and beam generation and management technology suitable for the THz band should be significantly considered such that data signals are transmitted through one or more paths.

Hologram Beamforming

Beamforming is a signal processing procedure that adjusts an antenna array to transmit radio signals in a specific direction. This is a subset of smart antennas or advanced antenna systems. Beamforming technology has several advantages, such as high signal-to-noise ratio, interference prevention and rejection, and high network efficiency. Hologram Beamforming (HBF) is a new beamforming method that differs significantly from MIMO systems because this uses a software-defined antenna. HBF will be a very effective approach for efficient and flexible transmission and reception of signals in multi-antenna communication devices in 6G.

Optical wireless technology

Optical wireless communication (OWC) is a form of optical communication that uses visible light, infrared light (IR), or ultraviolet light (UV) to transmit signals. OWC that operates in the visible light band (e.g., 390 to 750 nm) is commonly referred to as visible light communication (VLC). VLC implementations may utilize light-emitting diodes (LEDs). VLC can be used in a variety of applications, including wireless local area networks, wireless personal communications networks, and vehicular networks.

VLC has the following advantages over RF-based technologies. First, the spectrum occupied by VLC is free/unlicensed and can provide a wide range of bandwidth (THz-level bandwidth). Second, VLC rarely causes significant interference to other electromagnetic devices; therefore, VLC can be applied in sensitive electromagnetic interference applications such as aircraft and hospitals. Third, VLC has strengths in communications security and privacy. The transmission medium of VLC-based networks, i.e., visible light, cannot penetrate walls and other opaque obstacles. Therefore, the transmission range of VLC can be limited to indoors, which can protect users' privacy and sensitive information. Fourth, VLC can use any light source as a base station, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSOs can operate in the near-infrared frequencies (750-1600 nm). Laser transmitters can be used in FSO implementations, and FSO can provide high data rates (e.g., 10 Gbit/s), offering a potential solution to backhaul bottlenecks.

These OWC technologies are planned for 6G communications, in addition to RF-based communications for any possible device-to-access network. These networks will access network-to-backhaul/fronthaul network connections. OWC technology has already been in use since 4G communication systems, but will be more widely used to meet the needs of 6G communication systems. OWC technologies such as light fidelity, visible light communication, optical camera communication, and FSO communication based on optical bands are already well-known technologies. Communication based on optical wireless technology can provide extremely high data rates, low latency, and secure communication.

Light Detection And Ranging (LiDAR) can also be utilized for ultra-high resolution 3D mapping in 6G communications based on the optical band. LiDAR is a remote sensing method that uses near-infrared, visible, and ultraviolet light to shine a light on an object, and the reflected light is detected by a light sensor to measure distance. LiDAR can be used for fully automated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a good technology for providing backhaul connection in the 6G system along with the optical fiber network. When FSO is used, very long-distance communication is possible even at a distance of 10,000 km or more. FSO supports mass backhaul connections for remote and non-remote areas such as sea, space, underwater and isolated islands. FSO also supports cellular base station connections.

Non-Terrestrial Networks (NTN)

6G systems will integrate terrestrial and aerial networks to support vertically expanding user communications. 3D BS will be provided via low-orbit satellites and UAVs. Adding a new dimension in terms of altitude and associated degrees of freedom makes 3D connectivity quite different from traditional 2D networks. NR considers Non-Terrestrial Networks (NTNs) as one way to do this. An NTN is a network or network segment that uses RF resources aboard a satellite (or UAS platform). There are two common scenarios for NTNs that provide access to user equipment: transparent payloads and regenerative payloads. The following are the basic elements of an NTN

- One or multiple sat-gateways connecting the NTN to the public data network.
- GEO satellites are fed by one or multiple satellite gateways deployed across the satellite target range (e.g., regional or continental coverage). We assume that a UE in a cell is served by only one sat-gateway.
- Non-GEO satellites that are continuously served by one or multiple satellite gateways at a time. The system shall ensure service and feeder link continuity between successive servicing satellite gateways with a time duration sufficient to allow mobility anchoring and handover to proceed.
- The feeder link or radio link between the satellite gateway and the satellite (or UAS platform).
- Service link or radio link between user equipment and the satellite (or UAS platform).
- Satellite (or UAS platform) capable of implementing transparent or regenerative (including onboard processing) payloads. Satellite (or UAS platform) generated beam A satellite (or UAS platform) generates multiple beams for a given service area, typically based on its field of view. The footprint of a beam is typically elliptical. The field of view of the satellite (or UAS platform) depends on the onboard antenna diagram and the minimum angle of attack.
- Transparent payload: Radio frequency filtering, frequency conversion, and amplification. Therefore, the waveform signal repeated by the payload remains unchanged.
- Regenerative payload: Radio frequency filtering, frequency conversion and amplification, demodulation/decryption, switching and/or routing, and coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The user equipment is serviced by the satellite (or UAS platform) within the targeted coverage area.

Typically, GEO satellites and UAS are used to provide continental, regional, or local services.

Typically, constellations in LEO and MEO are used to provide service in both the Northern and Southern Hemispheres. In some cases, constellations can also provide global coverage, including polar regions. The latter requires proper orbital inclination, sufficient beams generated, and links between satellites.

Quantum Communication

Quantum communication is a next-generation communication technology that can overcome the limitations of existing communication technologies such as security and ultra-high-speed computation by applying quantum mechanical properties to the field of information and communication. Quantum communication provides a means of generating, transmitting, processing, and storing information that cannot be expressed in the form of 0s and 1s according to the binary bit information used in conventional communication technologies. In conventional communication technologies, wavelengths or amplitudes are used to transmit information between the sender and receiver, but in quantum communication, photons, the smallest unit of light, are used to transmit information between the sender and receiver. In particular, in the case of quantum communication, quantum uncertainty and quantum irreversibility can be used for the polarization or phase difference of photons (light), so quantum communication has the characteristic of being able to communicate with perfect security. Quantum communication may also enable ultrafast communication using quantum entanglement under certain conditions.

Cell-free Communication

The tight integration of multiple frequencies and heterogeneous communication technologies is crucial for 6G systems. As a result, users will be able to seamlessly move from one network to another without having to create any manual configurations on their devices. The best network is automatically selected from the available communication technologies. This will break the limitations of the cell concept in wireless communications. Currently, the movement of users from one cell to another causes too many handovers in dense networks, resulting in handover failures, handover delays, data loss, and ping-pong effects. 6G cell-free communications will overcome all of these and provide better QoS.
Cell-free communication is defined as "a system in which multiple geographically distributed antennas (APs) cooperatively serve a small number of terminals using the same time/frequency resources with the help of a fronthaul network and a CPU." A single terminal is served by a set of multiple APs, called an AP cluster. There are several ways to form AP clusters, among which the method of organizing AP clusters with APs that can significantly contribute to improving the reception performance of a terminal is called the terminal-centric clustering method, and the configuration is dynamically updated as the terminal moves. This device-centric AP clustering technique ensures that the device is always at the center of the AP cluster and is therefore immune to inter-cluster interference that can occur when a device is located at the boundary of an AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone will be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

Integrated Access and Backhaul Network

In 6G, the density of access networks will be enormous. Each access network is connected by optical fiber and backhaul connection such as FSO network. To cope with a very large number of access networks, there will be a tight integration between the access and backhaul networks.

Big Data Analysis

Big data analysis is a complex process for analyzing various large data sets or big data. This process finds information such as hidden data, unknown correlations, and customer disposition to ensure complete data management.

Big data is collected from various sources such as video, social networks, images and sensors. This technology is widely used for processing massive data in the 6G system.

Reconfigurable Intelligent Metasurface

There has been a large body of research that considers the radio environment as a variable to be optimized along with the transmitter and receiver. The radio environment created by this approach is referred to as a Smart Radio Environment (SRE) or Intelligent Radio Environment (IRE) to emphasize its fundamental difference from past design and optimization criteria. Various terms have been proposed for reconfigurable intelligent antenna (or intelligent reconfigurable antenna technology) technologies to enable SRE, including Reconfigurable Metasurfaces, Smart Large Intelligent Surfaces (SLIS), Large Intelligent Surfaces (LIS), Reconfigurable Intelligent Surface (RIS), and Intelligent Reflecting Surface (IRS).

In the case of THz band signals, there are many shadowed areas caused by obstacles due to the strong straightness of the signal, and RIS technology is important to expand the communication area by installing RIS near these shadowed areas to enhance communication stability and provide additional value-added services. RIS is an artificial surface made of electromagnetic materials that can alter the propagation of incoming and outgoing radio waves. Although RIS can be seen as an extension of massive MIMO, it has a different array structure and operating mechanism than massive MIMO. RIS has the advantage of low power consumption because it operates as a reconfigurable reflector with passive elements, i.e., it only passively reflects signals without using active RF chains. Furthermore, each of the passive reflectors in the RIS must independently adjust the phase shift of the incoming signal, which can be advantageous for the wireless communication channel. By properly adjusting the phase shift through the RIS controller, the reflected signals can be gathered at the target receiver to boost the received signal power.

In addition to reflecting radio signals, there are also RISs that can tune transmission and refractive properties, and these RISs are often used for outdoor to indoor (O2I) applications. Recently, STAR-RIS (Simultaneous Transmission and Reflection RIS), which provides transmission at the same time as reflection, has also been actively researched.

Metaverse

Metaverse is a combination of the words "meta" meaning virtual, transcendent, and "universe" meaning space. Generally speaking, the term is used to describe a three-dimensional virtual space in which social and economic activities are the same as in the real world.

Extended Reality (XR), a key technology that enables the metaverse, is the fusion of the virtual and the real, which can extend the experience of reality and provide a unique immersive experience. The high bandwidth and low latency of 6G networks will enable users to experience more immersive virtual reality (VR) and augmented reality (AR) experiences.

Autonomous Driving (Self-driving)

For fully autonomous driving, vehicles need to communicate with each other to alert each other to dangerous situations, or with infrastructure such as parking lots and traffic lights to check information such as the location of parking information and signal change times. Vehicle-to-Everything (V2X), a key element in building an autonomous driving infrastructure, is a technology that enables vehicles to communicate and share information with various elements on the road, such as vehicle-to-vehicle (V2V) and vehicle-to-infrastructure (V2I), in order to drive autonomously.

In order to maximize the performance of autonomous driving and ensure high safety, fast transmission speeds and low latency technologies are essential. In addition, in the future, autonomous driving will go beyond delivering warnings and guidance messages to the driver to actively intervene in the operation of the vehicle and directly control the vehicle in dangerous situations, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Block-chain

A blockchain will be important technology for managing large amounts of data in future communication systems. The blockchain is a form of distributed ledger technology, and distributed ledger is a database distributed across numerous nodes or computing devices. Each node duplicates and stores the same copy of the ledger. The blockchain is managed through a peer-to-peer (P2P) network. This may exist without being managed by a centralized institution or server. Blockchain data is collected together and organized into blocks. The blocks are connected to each other and protected using encryption. The blockchain completely complements large-scale IoT through improved interoperability, security, privacy, stability and scalability. Accordingly, the blockchain technology provides several functions such as interoperability between devices, high-capacity data traceability, autonomous interaction of different IoT systems, and large-scale connection stability of 6G communication systems.

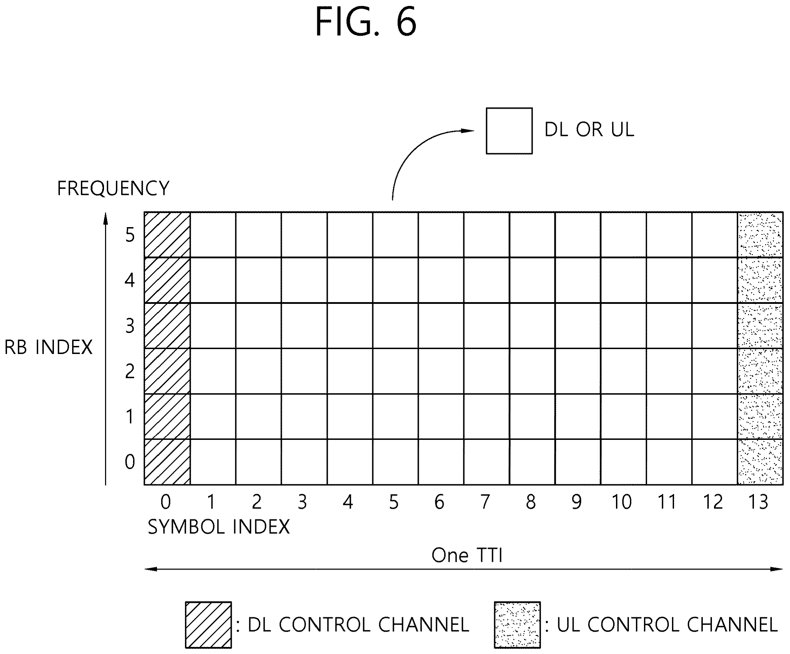

**FIG. 6 shows an example of subframe types in NR.**

The TTI (transmission time interval) shown in FIG. 6 may be referred to as a subframe or a slot for NR (or new RAT). The subframe (or slot) of FIG. 6 may be used in a TDD system of NR (or new RAT) to minimize data transmission delay. As shown in FIG. 6, a subframe (or slot) includes 14 symbols, like the current subframe. The front symbol of the subframe (or slot) may be used for the DL control channel, and the rear symbol of the subframe (or slot) may be used for the UL control channel. The remaining symbols may be used for DL data transmission or UL data transmission. According to this subframe (or slot) structure, downlink transmission and uplink transmission may be sequentially performed in one subframe (or slot). Accordingly, downlink data may be received within a subframe (or slot), and uplink acknowledgment (ACK/NACK) may be transmitted within the subframe (or slot). The structure of such a subframe (or slot) may be referred to as a self-contained subframe (or slot). When the structure of such subframe (or slot) is used, the time it takes to retransmit data in which a reception error occurs is reduced, so that the final data transmission latency can be minimized. In such a self-contained subframe (or slot) structure, a time gap, from the transmission mode to the reception mode or from the reception mode to the transmission mode, may be required in a transition process. To this, some OFDM symbols when switching from DL to UL in the subframe structure may be set as a guard period (GP).

**<NR to SS block>**

SS block (SS / PBCH block: SSB) include information necessary for the terminal to perform initial access in 5G NR, that is, a physical broadcast channel (PBCH) including a master information block (MIB) and a synchronization signal (Synchronization Signal: SS) (PSS and SSS).

In addition, a plurality of SSBs may be bundled to define an SS burst, and a plurality of SS bursts may be bundled to define an SS burst set. It is assumed that each SSB is beamformed in a specific direction, and several SSBs in the SS burst set are designed to support terminals existing in different directions, respectively.

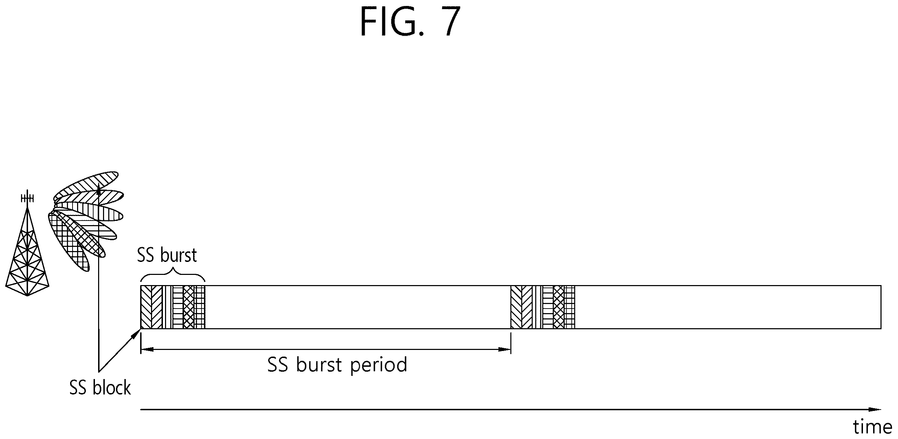

**FIG. 7 is an exemplary diagram illustrating an example of an SS block in NR.**

Referring to FIG. 7, the SS burst is transmitted every predetermined period. Accordingly, the terminal receives the SS block, and performs cell detection and measurement.

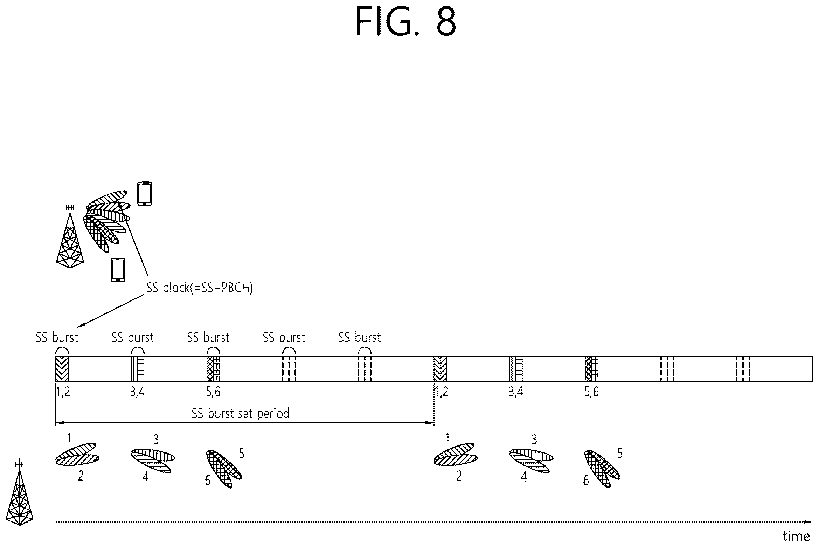

Meanwhile, in 5G NR, beam sweeping is performed for SS. This will be described with reference to FIG. 8.

**FIG. 8 is an exemplary diagram illustrating an example of beam sweeping in NR.**

The base station transmits each SS block in the SS burst while performing beam sweeping according to time. In this case, several SS blocks in the SS burst set are transmitted to support terminals existing in different directions, respectively.

**< Non-Terrestrial Networks >**

A Non-Terrestrial Network (NTN) is a network segment or network that utilizes RF resources aboard a satellite (or UAS platform).

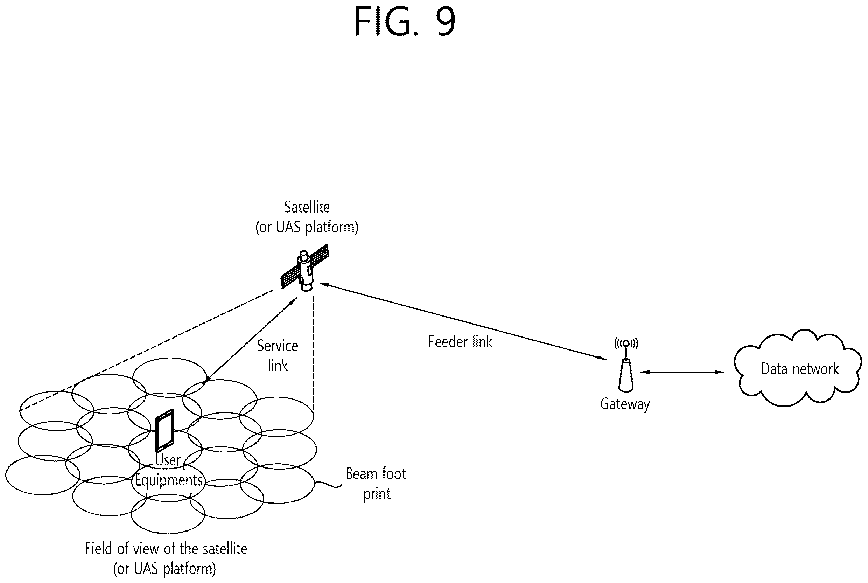

**FIG. 9 is an example diagram showing an NTN scenario based on a transmissive payload.**

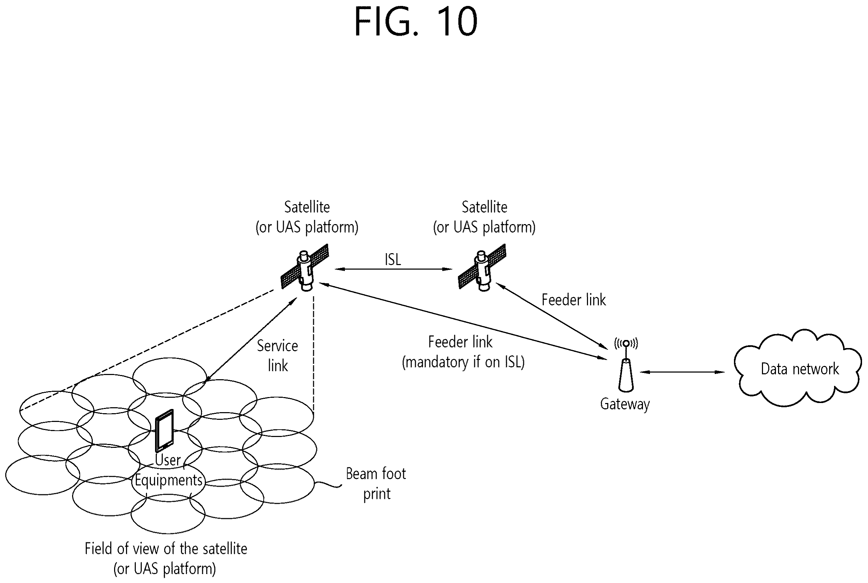

**FIG. 10 is an example diagram showing an NTN scenario based on a regenerative payload.**

There are two general scenarios for NTNs that provide access to user equipment: transparent payloads and regenerative payloads.

NTNs are typically characterized by the following elements

- One or multiple sat-gateways connecting the NTN to the public data network.

- GEO satellites are fed by one or multiple sat-gateways deployed across the satellite target range (e.g., regional or continental coverage). It is assumed that a UE in a cell is served by only one sat-gateway.
- Non-GEO satellites that provide continuous service via one or multiple satellite gateways at a time. The system ensures service and feeder link continuity between successively serviced satellite gateways with a time duration sufficient to allow mobility anchoring and handover to proceed.
- The feeder link or radio link between the satellite gateway and the satellite (or UAS platform).
- The service link or radio link between the user equipment and the satellite (or UAS platform).
- Satellite (or UAS platform) capable of implementing transparent or regenerative (including onboard processing) payloads. Satellite (or UAS platform) generating beam generates multiple beams for a given service area, typically based on range of view. The footprint of the beam is typically elliptical. The field of view of the satellite (or UAS platform) depends on the onboard antenna diagram and the minimum angle.
- A transparent payload: Radio frequency filtering, frequency conversion, and amplification. Thus, the waveform signal repeated by the payload remains unchanged.
- Regenerative payload: Radio frequency filtering, frequency conversion and amplification, demodulation/decryption, switching and/or routing, coding/modulation. This is effectively the same as carrying all or part of the base station functions (e.g., gNB) on board a satellite (or UAS platform).
- Optionally, for satellite deployments, an inter-satellite link (ISL). This requires a regenerative payload on the satellite. ISL can operate at RF frequencies or in the optical band.
- The UE is served by a satellite (or UAS platform) within the target service area.

There may be different types of satellites (or UAS platforms) listed in Table 4.

[Table 4]

| Platforms | Altitude range | Orbit | Typical beam footprint size |
| --- | --- | --- | --- |
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

In general, GEO satellites and UAS are used to provide continental, regional, or local services.

Typically, constellations in LEO and MEO are used to provide services in both the Northern and Southern Hemispheres. In some cases, constellation can also provide global coverage, including polar regions. The latter requires proper orbital inclination, sufficient beams generated, and links between satellites.

NR-based NTN (non-terrestrial network) communication was introduced as a way to efficiently provide communication services via satellites (geostationary GEO, low earth orbit LEO, etc.) to areas not served by terrestrial networks. In the case of transparent satellites, the satellite amplifies the signal transmitted from the ground base station (gNB-NTN gateway) and transmits the signal to the terminal. In the case of regenerative satellites, the satellite performs the functions of the ground base station such as routing, coding and modulation, and decoding and demodulation in addition to signal amplification. NTN terminals are equipped with GPS and periodically receive location, time, and speed information about NTN satellites.

5G NR NTN (non-terrestrial network) is introduced to provide communication services using satellites/aircraft in the coverage holes of the existing terrestrial network (TN). According to types of satellites and airplanes, times and methods to serve areas are different. For example, GEO (Geostationary Earth Orbit) satellites can cover an area continuously because the rotation of the Earth and the rotation of the satellite are synchronized. In contrast, Low Earth Orbit (LEO) and High Altitude Polarized Satellites (HAPS) do not match the Earth's rotation with the satellite's rotation, so unlike GEO, they cannot serve an area continuously. These non-geostationary satellites are called NGSO (Non-Geostationary Orbit).

**1. transparent satellites based on NG-RAN architecture**

The satellite payload implements frequency conversion and radio frequency amplifiers in both the uplink and downlink directions. It corresponds to an analog RF repeater.

Thus, the satellite repeats the NR-Uu radio interface from the feeder link (between the NTN gateway and the satellite) to the service link (between the satellite and the UE) and vice versa.

The satellite radio interface (SRI) of the feeder link is NR-Uu. That is, the satellite does not terminate NR-Uu.

The NTN GW supports all the functions required to carry signals on the NR-Uu interface.

Different transparent satellites may be connected to the same gNB on the ground.

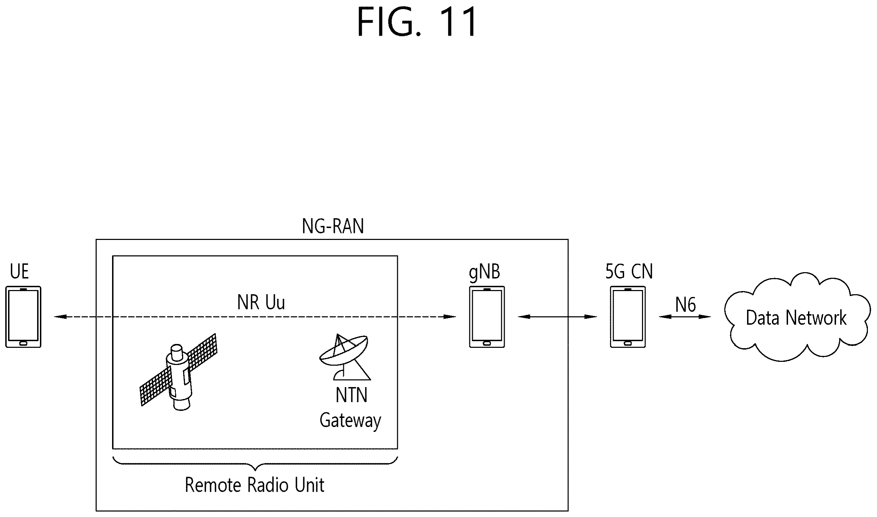

**FIG. 11 shows an example of a networking RAN architecture based on transparent satellites.**

Although a single satellite payload can be accessed by multiple gNBs, the description is simplified to a unique gNB accessing the satellite payload without loss of generality.

**2. Regenerative satellites based on NG-RAN architecture**

The satellite payload implements regeneration of signals received from the earth.

- NR-Uu radio interface in the service link between UE and satellite
- Satellite Radio Interface (SRI) on the feeder link between the NTN Gateway and the satellite.

The SRI is the transport link between the NTN GW and the satellite.

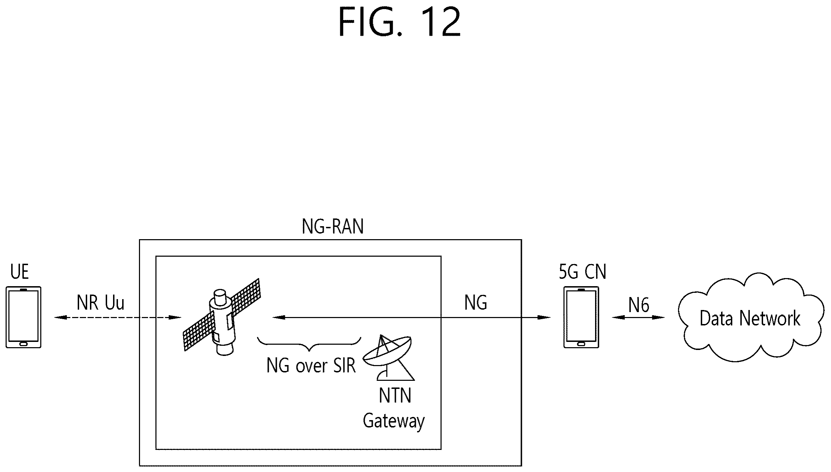

**FIG. 12 shows an example of an architecture based on a regenerative satellite without ISL.**

The satellites can perform additional traffic routing functions outside of RAN coverage.

The satellite payload also provides ISL (inter-satellite links) between satellites.

ISL are the transmission links between satellites. The ISL may be a wireless interface or an optical interface defined as 3GPP or non-3GPP.

The NTN GW is a transport network layer node and supports all required transport protocols.

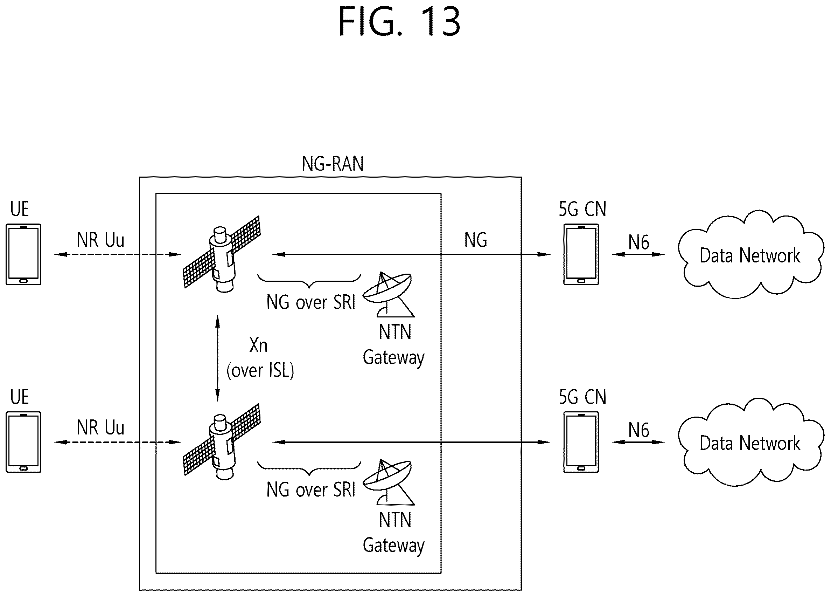

**FIG. 13 shows an example of an architecture based on regenerative satellites with ISL.**

Indicates that a UE served by a gNB on a satellite can access the 5GCN via ISL.

gNBs on different satellites may be connected to the same 5GCN on the ground.

If a satellite hosts more than one gNB, the same SRI carries all the corresponding NG interface instances.

< ATG (Air to Ground)

Air-to-Ground (ATG) refers to a communication system that uses cellular technology to connect an aircraft with a ground network. This allows the aircraft to establish a data connection and utilize a variety of services similar to those available on the ground, such as internet access, voice communications, and data transfer.

ATG systems typically rely on existing cellular infrastructure on the ground and utilize technologies such as 4G LTE or 5G networks to provide connectivity to the aircraft. Ground-based cellular towers or base stations are strategically placed to cover airspace and communicate with airborne equipment, especially antennas, which are pointed into the airspace rather than on the ground.

ATG communications are used for several purposes, including

- Passenger connectivity: ATG allows aircraft passengers to access the internet, use mobile applications, send and receive emails, and perform other online activities during flight.
- Flight operations: ATG connectivity supports real-time data transmission for aircraft operations, enabling aircraft to communicate with ground operations centers, receive weather updates, access flight plans, and transmit operational data.
- Aircraft monitoring and maintenance: ATG systems transmit aircraft health and performance data to maintenance centers on the ground to enable remote monitoring, diagnostics, and maintenance activities.
- Air traffic management: ATG can contribute to more efficient air traffic management by enabling real-time communication between aircraft and air traffic control systems, supporting trajectory optimization, and enhancing situational awareness.
- ATG technology continues to evolve, and future developments may include enhanced connectivity options, integration with satellite networks, and advances in network coverage and capacity to meet the growing demand for reliable, high-bandwidth connectivity during flight.

**\<Disclosure of the present specification\>**

This specification may propose to perform beam management based on the location of the base station. The proposed method may be applied to NTN environment and ATG environment.

## 1. NTN environment

When the satellite uses frequencies in the ultra-high frequency band above 10 GHz, in order to ensure the link quality between the NTN satellite and the NTN terminal, the NTN terminal needs to form beamforming for high antenna gain.

Depending on the type of NTN terminal, array antennas and parabolic (dish) antennas may be considered. In the present specification

The terminals may be categorized into UE type 1 and UE type 2 as follows

- UE type 1: phased array antenna based UE
- UE type 2: parabolic antenna based UE

A terminal supporting NTN in the ultra-high frequency band may inform the satellite(network) about the UE type 1 or UE type 2.

The terminal can transmit its capability to the network (or base station). The UE capabilities may include the ability to distinguish between electronic or mechanical steering antennas. A terminal with an electronic steering antenna may correspond to UE type 1. A terminal with a mechanical steering antenna may correspond to UE type 2.

In other words, the UE capabilities may include information about whether the terminal is a UE type 1 or UE type 2.

For UE type 1, the terminal may communicate by forming a beam. To do so, the terminal may perform beam management. Beam management may include a procedure for selecting an optimal beam by performing measurement while performing beam sweeping (or beam steering).

The terminal may operate at frequencies in the ultra-high frequency band. When the terminal detects/measures signals for NTN satellites by considering analog beamforming (e.g., cell detection, RSRP, SINR, etc.), the time for signal detection/measurement, etc. may be determined based on the beam sweeping operation of the terminal.

NTN terminals may be handheld terminal, very small aperture terminal (VSAT), Earth station in motion (ESIM), etc. ESIMs may be categorized into Aeronautical, Maritime, and Land-ESIMs.

For UE type 1, a VSAT or ESIM terminal may have more array antennas than a handheld terminal. Therefore, a VSAT or ESIM terminal may perform more beam sweeping. These characteristics may be considered for VSAT or ESIM terminals.

For example, for a handheld terminal, the time requirements for signal detection/measurement, etc. may be defined considering eight analog beams.

For example, for a VSAT or ESIM terminal of UE type 1, the time requirements for signal detection/measurement, etc. may be defined considering 32 or more analog beams.

As the number of analog beams increases, the time for signal detection/measurement, etc. may become longer, which may affect system performance.

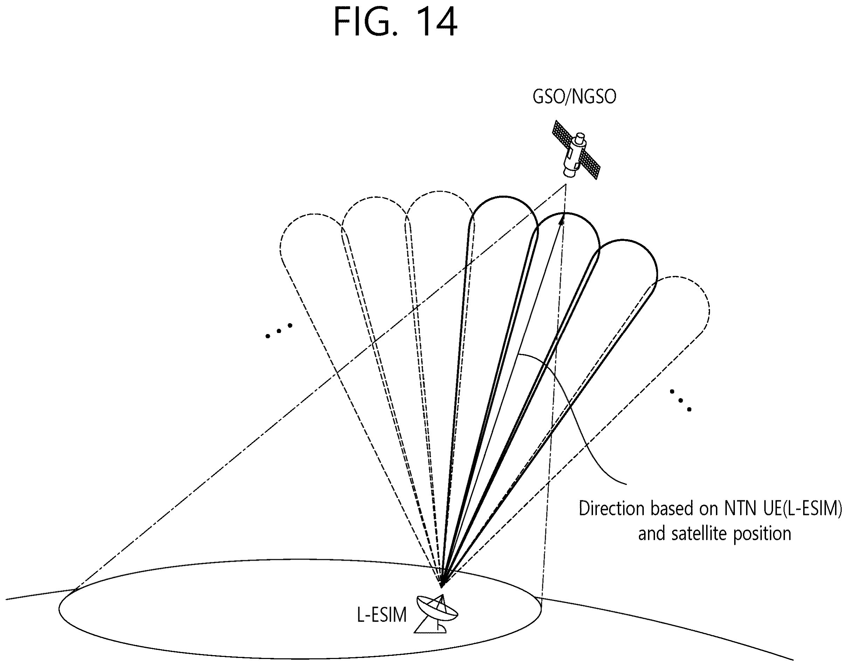

**FIG. 14 illustrates an example of beam tracking in accordance with embodiments of the present specification.**

FIG. 14 may be an example of beam tracking in mmWave above 10 GHz in an NTN environment.

For NTN communications, ephemeris information for each satellite may be provided to a terminal. Based on the ephemeris information of the satellite, the terminal may obtain information such as the location/time/velocity of the satellite.

The terminal may estimate the approximate beam direction based on position of the terminal and the location information of the satellite.

The location information of the terminal based on GNSS may include error. The position of the satellite based on ephemeris information may be inaccurate. Therefore, the beam direction may be predicted as a rough beam direction rather than the exact beam direction.

Based on the predicted rough beam direction, the terminal may perform final beam tracking to the satellite. That is, based on the predicted rough beam direction, the terminal may perform beam sweeping to determine (or establish) the optimal beam to the satellite.

For this purpose, the terminal may have a UE capability to predict (or estimate) the beam direction based on the terminal/satellite location.

The terminal may predict an rough beam direction based on its location and the satellite's location information.

In order to determine (or select) a final (or optimal) transmit/receive beam, the terminal may determine M limited candidate beams based on the rough beam direction (or satellite position information). The terminal may report the number (M) of determined limited candidate beams to the network (or base station, serving satellite).

To determine (or select) a final (or optimal) transmit/receive beam, the terminal may report to the network (or base station, serving satellite) a number M (e.g., M=3, $M \in \{1,2,3, ... ,12\}$) of constrained candidate beams for an rough beam direction. The number of limited candidate beams M may be 3. The terminal may perform beam sweeping (or steering) M (the number of a limited candidate beams) times.

The limited number of candidate beams M may be used for beam measurements (L1-RSRP measurements) based CSI-RS. The limited number of candidate beams M may be used for other measurements.

The terminal may perform measurements for handover. The terminal may perform measurements for handover by performing beam sweeping. The beam sweeping may be performed based on the M (the number of limited candidate beams).

Depending on the type (e.g., A-ESIM, M-ESIM, L-ESIM, fixed VSAT, etc.) of VSAT or ESIM terminal of the UE type 1, a different setting range for the value of M may be applied.

If the terminal does not have the capability to predict the beam direction based on location, a limited Rx beam sweeping factor may be considered for beam sweeping. The terminal may report its preferred Rx beam sweeping factor value to the satellite(network). Based on the report, the terminal may apply the Rx beam sweeping factor value to beam sweeping.

Methods such as beam direction prediction based location and signal detection/measurement based limited beam may also be applied to terminal based UE type 2. For terminal based UE type 2, the terminal may be configured to perform signal detection/measurement (etc.) for a fixed period of time for the satellite (or cell) being measured, taking into account the parabolic (dish) antenna characteristics. The network (or base station, serving satellite) may set the fixed time to the terminal. Alternatively, the terminal based UE type 2 may report the fixed time to the network, and may perform operations such as signal detection/measurement.

When performing ultra-high frequency band communication in the NTN environment, the terminal may perform beam sweeping for the target satellite (or target cell) that needs to be measured. The ultra-high frequency band may be FR2. The terminal may perform beam sweeping to measure the target satellite (or target cell).

Thus, the number of satellites (or cells) that the terminal can measure in one SMTC may be 1. If one or more SMTCs are set up in the terminal, the time for signal detection/measurement (etc.) may increase depending on the number of target satellites (or target cells) that the terminal needs to measure in each SMTC.

For example, if the number of satellites to be measured in one SMTC is 2, and the number of approximate candidate beams M for beam sweeping of the terminal is 4, the signal measurement of the terminal shall be performed in the time 'number of satellites (2) * M (4) * SMTC period * number of measurement samples (N)'. This time may be increased if it is overlapped with measurement gap or other measurement operations. Alternatively, to avoid increased measurement time, the number of target satellites (or target cells) set for SMTC may be limited to one.

For UE type 2 terminals, time may be required for tilting the parabolic antenna. Therefore, the transmission/reception of signals to/from the serving satellite (or cell) may be constrained by tilting the parabolic antenna for x symbols before/after the SSB symbols for measurement within the SMTC.

For UE type 1 terminals, the time to change between beams during beam switching may be greater than the cyclic prefix (CP) due to the increase of the number of arrays. Therefore, k guard symbols or scheduling restriction bins may be set to account for beam changes.

For example, in the case of CSI-RS L1-RSRP measurement based on repetition ON, a gap (guard) may be set between the symbols of consecutive CSI-RS resources. In other cases, such as SSB measurements in SMTC, TCI (transmission configuration indicator) switching (etc.), additional guard symbols or scheduling restrictions to account for beam change times may be considered.

The time for the beam change may vary depending on the type of terminal. The terminal may report to the network (or base station, serving satellite) information on whether the time is less or greater than the CP (whether it affects signal transmission/reception) or the number of symbols required.

The case of a UE Type 1 terminal handover to a target satellite (or target cell) is described below.

The UE may receive an RRC message implying a handover to a NR SAN (satellite access node) cell. Based on the RRC message, the UE may be required to be ready to start the transmission of a new uplink PRACH (physical random access channel) within $D_{handover}$ msec after the end of the last TTI containing the RRC command.

The transmission of the new uplink PRACH may be to a target cell (or base station or NTN satellite, etc.). The terminal may perform a random access procedure with the target cell (or base station or NTN satellite, etc.) for the handover. The transmission of the new uplink PRACH may be included in the random access procedure with the target cell (or base station or NTN satellite, etc.) for the handover.

The $D_{handover}$ may be the defined delay of the corresponding RRC procedure plus the downtime.

The downtime may be the time between the end of the last TTI containing an RRC command in the previous PDSCH, excluding the RRC procedure delay, and the time when the UE starts transmission of the new PRACH.

If an intra-frequency or inter-frequency handover for an NR SAN cell is commanded and the target NR SAN cell is served by a different satellite than the serving cell, the interruption time shall be less than $T_{interrupt\_inter\_sat}$.

$T_{interrupt\_inter\_sat}$ may be as follows:

-

$$T_{interrupt\_inter\_sat} = T_{search} + T_{IU} + T_{processing} + T_{sat\_beam} + T + T_{margin} \, (ms)$$

- $T_{search}$ may be the time required to search for the target NR SAN cell.
- T may be the time it takes to precisely track and acquire the full timing information of the target cell. $T = T_{rs}$.
- $T_{processing}$ may be the time required for UE processing. $T_{processing}$ may be up to 20 ms.
- $T_{margin}$ may be the SSB post-processing time. $T_{margin}$ can be up to 2 ms.
- $T_{IU}$ may be the interruption uncertainty when acquiring the first available PRACH opportunity in a new cell.
- $T_{sat\_beam}$ may be the additional time for the UE to adjust the downlink spatial domain receive filter to the target cell. For a UE that indicates UE type 1 via its UE capability, $T_{sat\_beam}$ may be $3*T_{rs}$.
- $T_{rs}$ may be the SMTC period of the target NR SAN cell if the UE has been provided with the SMTC configuration for the target cell in the handover command. Otherwise, $T_{rs}$ may be the SMTC configured in measObjectNR with the same SSB frequency and subcarrier spacing.

The UE type 1 terminal may have previously received information about the target cell. The terminal may receive a handover command message from the serving cell to the target cell. Based on the handover command, the terminal may perform target cell discovery and random access procedures (for handover) with the target cell (or base station or NTN satellite, etc.). For the target cell discovery and random access procedure, the UE type 1 terminal may perform beam sweeping to perform measurements on the target cell.

The terminal may report the measurement results to the network (or base station, serving satellite).

The terminal may determine the limited number of candidate beams (e.g., 3) based on the location information of the target cell.

The terminal may determine M limited candidate beams based on the location information of the target cell. The terminal may report the number of limited candidate beams to the network (or base station, serving satellite).

The terminal may perform beam sweeping based on the determined M limited candidate beams. The terminal may perform beam sweeping on the M limited candidate beams to perform measurements for handover and beam establishment to the target cell.

When beam sweeping is performed, the $T_{sar\_beam}$ described above may be proportional to the number of times (M) of beam sweeping (or steering). If M (the number of limited candidate beams) is 3, $T_{sat\_beam}$ may be $3*T_{rs}$.

Based on the location information of the target cell, M limited candidate beams may be determined. Therefore, based on M, there may be a delay in when the target cell receives the PRACH from the terminal. Furthermore, the time at which the handover procedure to the target cell is performed may be proportional to M.

The above operations may be applied in FR2 in an NTN environment.

## 2. ATG Environment

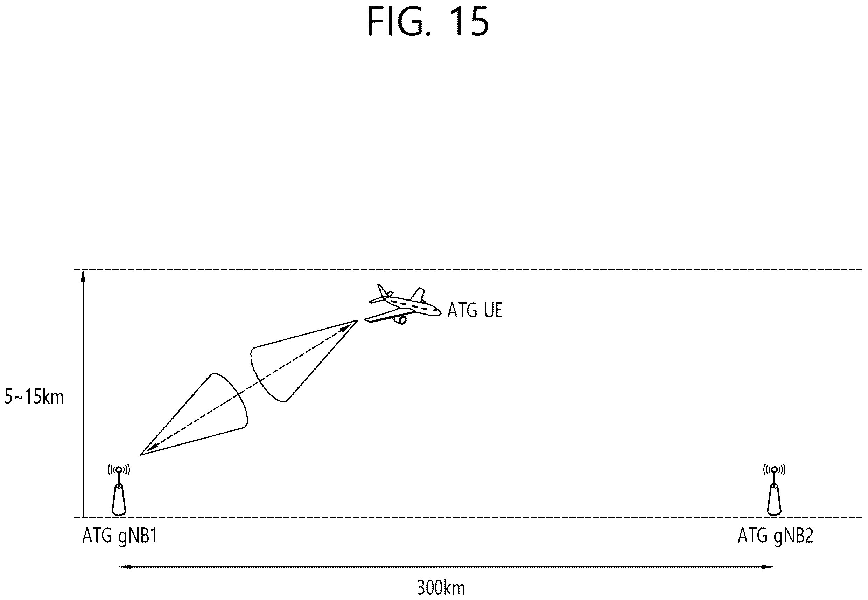

**FIG. 15 shows an example of beam steering in an ATG environment according to embodiments of the present specification.**

In the NTN environment, the above operations may be applied in the ATG environment (Communication between aircraft/aircraft/urban air mobility (ATG UE: Air to Ground UE) and ground base station).

In the NTN environment, the above operations may be applied in FR1 (frequency rang 1) (sub 7 GHz) in addition to the ultra-high frequency band.

In FR1, since the terminal is basically an omni-directional antenna, the terminal may simultaneously receive signals from the serving cell and neighboring cells and perform measurements (e.g., RSRP, SINR, RSRQ, etc.) when transmitting or receiving signals to or from the serving or neighboring cells.

However, if the terminal (ATG terminal) communicating in the ATG environment is a directional antenna, the ATG terminal may perform beam steering to the base station (ATG gNB 1). In order for the ATG terminal to communicate (receive or transmit a signal) with other base station (ATG gNB 2), beam steering may be performed toward the other base station (ATG gNB 2). Therefore, in this case, the above operations (location-based beam steering) may be applied in an NTN environment. The ATG terminal may perform measurements based on the location-based beam steering.

The terminal may report to the network (or base station) the capability indicating whether it is a directional antenna or an omnidirectional antenna.

The terminal may receive information from the network (or base station) about the location of a ground base station.

The terminal may predict a rough beam direction based on its location and the location information of the base station. The location information of its own location and the location information of the ground base station may be subject to error. Therefore, the terminal may predict a rough beam direction rather than an exact beam direction. The terminal may determine M (e.g., M=3, M∈{1,2,3, ... ,12}) limited candidate beams based on the rough beam direction (or the location of the ground station). The terminal may report the number of determined limited candidate beams to the network (or base station).

For this purpose, the UE may have the UE capability to predict (or estimate) the beam direction based on location of the UE/base station. The limited number of candidate beams M may be 3.

The terminal may perform beam sweeping (or steering) M times (the number of constrained candidate beams). The terminal may perform beam sweeping for M limited candidate beams. The terminal may perform measurements over the beam sweeping. The measurements are not limited to handover. For example, the measurements may be measurements for a serving cell.

The number of limited candidate beams M may be used for SSB-based measurements (L3-RSRP measurements). The number of limited candidate beams M may be used for other measurements. The SSB-based measurement (L3-RSRP measurement) may be a measurement for handover.

If the terminal does not have the capability to predict the beam direction based on location, a limited Rx beam sweeping factor may be considered for beam sweeping. The terminal may report its preferred Rx beam sweeping factor value to the network. Based on the report, the terminal may apply the Rx beam sweeping factor value to beam sweeping.

The number of ground base stations that the terminal can measure in one SMTC may be 1. If one or more SMTCs are set up in the terminal, the time for signal detection/measurement (etc.) may increase depending on the number of the ground base stations that the terminal needs to measure in each SMTC.

For example, if the number of ground base stations that need to be measured in one SMTC is 2, and the number of rough candidate beams M for beam sweeping of the terminal is 4, the signal measurement of the terminal shall be performed in the time 'number of satellites (2) * M (4) * SMTC period * number of measurement samples (N)'. This time may be increased if it is overlapped with measurement gap or other measurement operations. Alternatively, to avoid increased measurement time, the number of ground base stations set up for SMTC may be limited to one.

The terminal may determine M limited candidate beams based on the location information of the ground base station that needs to be measured. The terminal may report the number of limited candidate beams to the network (or base station).

The terminal may perform beam sweeping based on the determined M limited candidate beams. The terminal may perform beam sweeping on the M limited candidate beams to perform measurements.

The terminal may report the measurement results to the network (or base station).

The time over which the measurements are performed may be proportional to M. Thus, the time at which operations based on the measurements are performed may be based on M . For example, the time at which a handover procedure is performed may be based on M. For example, the time at which a cell reselection procedure requiring measurements for a serving cell is performed may be based on M. For example, the time at which the network (or base station) receives the measurement results from the terminal may be based on M .

If the ATG terminal performs directional antenna-based operation, the terminal may report to the network (or base station) its capability to support an antennaArrayType-18 as shown in Table 5. The terminal may then perform the relevant measurement operation.

[Table 5]

| Definitions for parameters | Per | M | FDD - TDD DIFF | FR1 - FR2 DIFF |
|---|---|---|---|---|
| **antennaArrayType-r18**<br>Indicates whether the UE supports the RF and RRM requirements with antenna array. If the field is absent, the RF and RRM requirements with omni-directional antenna. The UE indicating support of this feature shall also indicate support of airToGroundNetwork-r18. This field is only applicable for bands as specified for ATG. | Band | CY | N/A | FR1 only |

The antennaArrayType-18 may indicate whether the UE supports the RF and RRM requirements with antenna array. If the antennaArrayType-18 field is not present, the RF and RRM requirements may be with omnidirectional antennas. A UE indicating support of this feature shall also indicate support of airToGroundNetwork-r18. This field is only applicable for bands as specified for ATG.

When the terminal is in IDLE/INACTIVE mode, Table 6 may be applied by the terminal to measure the serving cell. Table 6 indicates $N_{serv}$.

[Table 6]

| DRX cycle length [s] | Scaling Factor (N1) | Nserv [number of DRX cycles] |
|---|---|---|
| | FR1 | |
| 0.32 | N1[Note 1] | M1*N1*4 |
| 0.64 | | M1*N1*4 |
| 1.28 | | N1*2 |
| 2.56 | | N1*2 |
| Note 1: For UE with [antenna arrays], If network assistance is provided for the ATG cell reference location, N1 may be 3; otherwise, N1 may be 4. For UE with [omnidirectional antennas], N1 may be 1. | | |

"antenna arrays" may be directional antennas, and "omnidirectional antennas" may be omnidirectional antennas.

If the terminal evaluates in $N_{serv}$ consecutive DRX cycles that the serving cell does not meet the cell selection criteria S according to Table 6, the terminal may initiate measurement of all neighboring cells indicated by the serving cell, regardless of the measurement rules currently restricting terminal measurement activity.

For example, in an ATG environment, if the terminal supports directional antennas, when the terminal is in IDLE/INACTIVE mode, the terminal may evaluate that the measurement results for the serving cell do not meet the cell selection criteria S for 3*M1*4 DRX cycles. In this case, the terminal may initiate measurements of all neighboring cells indicated by the serving cell.

$N_{serv}$ may be as shown in Table 6.

When the terminal is in IDLE/INACTIVE mode, Table 7 may be applied for cell measurements for cell reselection (intra-frequency case) of the terminal. Table 7 indicates the number of DRX cycles.

[Table 7]

| DRX cycle length [s] | Scaling Factor (N1) | $T_{detect,NR\_Intra}$ [s] (number of DRX cycles) | $T_{measure,NR\_Intra}$ [s] (number of DRX cycles) | $T_{evaluate,NR\_Intra}$ [s] (number of DRX cycles) |
|---|---|---|---|---|
| | FR1 | | | |
| 0.3 2 | N1[Note 1] | 11.52 x N1 x M2 (36 x N1 x M2) | 1.28 x N1 x M2 (4 x N1 x M2) | 5.12 x N1 x M2 (16 x N1 x M2) |
| 0.6 4 | | 17.92 x N1 (28 x N1) | 1.28 x N1 (2 x N1) | 5.12 x N1 (8 x N1) |
| 1.2 8 | | 32 x N1 (25 x N1) | 1.28 x N1 (1 x N1) | 6.4 x N1 (5 x N1) |
| 2.5 6 | | 58.88 x N1 (23 x N1) | 2.56 x N1 (1 x N1) | 7.68 x N1 (3 x N1) |
| Note 1: For UEs with [antenna arrays], N1 may be 3 when network assistance on ATG cells reference locations is provided, otherwise N1 may be 4. For UEs with [omnidirectional antennas], N1 may be 1 | | | | |
| Note 2: M2 may be 1.5 if SMTC periodicity of measured intra-frequency cell > 20 ms; otherwise, M2 may be 1. If different SMTC periodicities are configured for different cells, the SMTC periodicity in this note is the one used by the cell being identified. During PSS/SSS detection, the periodicity of the SMTC configured for the intra-frequency carrier is assumed, and if the actual SSB transmission periodicity is greater than the SMTC configured for the intra-frequency carrier, longer $T_{detect, NR\_intra}$ may be expected. | | | | |

'antenna arrays' may be directional antennas, and 'omnidirectional antennas' may be omnidirectional antennas.

When $T_{reselection} = 0$, the terminal shall be able to evaluate whether a newly detectable intra-frequency cell meets the $T_{detect,NR\_Intra}$ reselection criteria.

The terminal shall measure SS-RSRP and SS-RSRQ at least every $T_{measure,NR\_Intra}$ for intra-frequency cells identified and measured according to the measurement rules.

The terminal shall use at least two measurements to filter the SS-RSRP and SS-RSRQ measurements for each measured intra-frequency cell. Within the set of measurements used for filtering, the minimum two measurements shall be separated by at least $T_{measure,NR\_Intra}/2$.

The terminal may not consider NR neighbor cells when reselecting cells if the serving cell's measurement control system information indicates that it is not allowed.

For intra-frequency cells that have already been detected but not reselected, filtering shall be performed so that they can be evaluated as meeting the reselection criteria within $T_{evaluate,NR\_Intra}$ when $T_{reselection} = 0$.

$T_{detect,NR\_Intra}$, $T_{measure,NR\_Intra}$, and $T_{evaluate,NR\_Intra}$ may be as shown in Table 7.

If the SMTC period (TSMTC) is greater than 20 ms and the DRX cycle is 0.64 seconds or less, M1 may be 2. Otherwise, M1 may be 1.

If the terminal is in CONNECTED mode, Table 8 may apply for L3 measurements (intra-frequency).

[Table 8]

| DRX cycle | T SSB_measurement_period_intra |
|---|---|
| No DRX | max(200ms, ceil( 5 x Kp x N1 Note 2 x $K_{layer1\_measurement}$) x SMTC period)Note 1 X $CSSF_{intra}$ |
| DRX cycle≤ 320ms | max(200ms, ceil(1.5x 5 x $K_p$ x N1 Note 2 x $K_{layer1\_measurement}$) x max(SMTC period,DRX cycle)) x $CSSF_{intra}$ |
| DRX cycle>320ms | ceil( 5 x $K_p$ x N1 Note 2 x $K_{layer1\_measurement}$) x DRX cycle x $CSSF_{intra}$ |
| Note 1: If different SMTC period are configured for different cells, the SMTC period in the requirement may be the period used in the identified cell.<br>Note 2: For UEs with [antenna array], N1 = 3 if network assistance for ATG cell reference location is provided, otherwise N1 = 4.<br>Otherwise, N1 = 1. | |

$K_p$ may be a scaling factor for measuring the SSB frequency layer without measurement interval.

$K_{layer1\_measurement}$ may be a scaling factor for sharing between L3 and L1 measurements.

$CSSF_{intra}$ may be a carrier-specific scaling factor.

If the terminal is not instructed to report SSB-based RRM measurement results with associated SSB index (reportQuantityRsIndexes or maxNrofRSIndexesToReport is not configured) or if the terminal indicates that neighboring cells are synchronized with the serving cell (deriveSSB-IndexFromCell is enabled), the terminal shall be able to identify newly detectable intra-frequency cells within $T_{identify\_intra\_without\_index}$. The terminal shall be able to identify within $T_{identify\_intra\_without\_index}$ the newly detectable intra-frequency SS block of an already detected cell. It is assumed that deriveSSB- ndexFromCell is always enabled for FR1 TDD and FR2. $T_{identify\_intra\_without\_index}$ may be $T_{PSS/SSS\_sync\_intra}$ plus T SSB_measurement_period_intra. $T_{SSB\_measurement\_period\_intra}$ may be as shown in Table 8.

If the terminal performs NTN communication in the ultra-high frequency bands above 10 GHz, the following operation may be performed.

- Report the antenna type of the terminal.
- Report the ability to set beam direction based on terminal/satellite location.
- Report the number of beams or lock time of the terminal for signal detection/measurement, etc.
- Report whether the terminal's beam change time affects signal transmission/reception or the number of symbols required.
- Based on the information reported above, the time for signal detection/measurement, (etc.) may be set.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

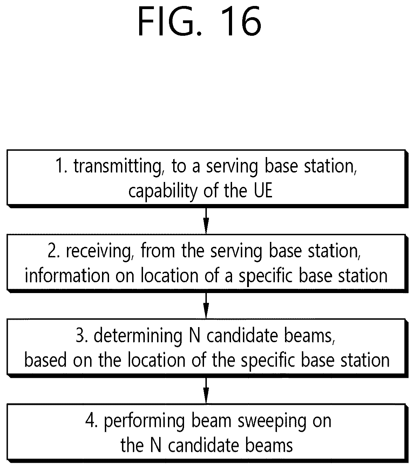

**FIG. 16 shows the procedure of the UE according to disclosure of the present specification.**

1. The UE may transmit, to a serving base station, capability of the UE.

The capability may include information that an antenna of the UE is a directional antenna.

2. The UE may receive, from the serving base station, information on location of a specific base station.

3. The UE may determine N candidate beams, based on the location of the specific base station.

4. The UE may perform beam sweeping on the N candidate beams.

The N may be 3.

The UE may perform measurement for the specific base station, based on the beam sweeping.

The specific base station may be a satellite for NTN (Non-Terrestrial Networks) communication.

The UE may receive, from the serving base station, a handover command to the specific base station.

The UE may perform measurement for the specific base station, based on the beam sweeping.

The UE may perform handover to the specific base station, based on the measurement.

The UE may be a UE for ATG (Air to Ground) communication.

The specific base station may be a ground base station.

The UE may receive, from the serving base station, a handover command to the specific base station.

The UE may perform measurement for the specific base station, based on the beam sweeping.

The UE may perform handover to the specific base station, based on the measurement.

The UE may perform cell measurement of the specific base station for cell reselection, based on the beam sweeping.

The UE may be in IDLE or INACTIVE mode.

The cell measurement may be performed, based on the N.

The N may be 3.

Hereinafter, an apparatus for performing communication according to some embodiments of the present specification will be described.

For example, a UE may include a processor, a transceiver, and a memory.

For example, a processor may be configured to be operably coupled with a memory and a processor.

The processor may perform: transmitting, to a serving base station, capability of the UE; wherein the capability includes information that an antenna of the UE is a directional antenna, receiving, from the serving base station, information on location of a specific base station; determining N candidate beams, based on the location of the specific base station; performing beam sweeping on the N candidate beams.

Hereinafter, a processor for providing communication according to some embodiments of the present specification will be described.

The processor is configured to: transmitting, to a serving base station, capability of the UE; wherein the capability includes information that an antenna of the UE is a directional antenna, receiving, from the serving base station, information on location of a specific base station; determining N candidate beams, based on the location of the specific base station; performing beam sweeping on the N candidate beams.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to a serving base station, capability of the UE; wherein the capability includes information that an antenna of the UE is a directional antenna, receiving, from the serving base station, information on location of a specific base station; determining N candidate beams, based on the location of the specific base station; performing beam sweeping on the N candidate beams.

The present specification may have various effects.

For example, by performing a rough beam direction prediction based on location information, the operation can be performed quickly compared to beam sweeping in all directions..

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

**Claims**

1. A method for performing communication, performed by a User Equipment (UE), comprising:

   transmitting, to a serving base station, capability of the UE;
   wherein the capability includes information that an antenna of the UE is a directional antenna,
   receiving, from the serving base station, information on location of a specific base station;
   determining N candidate beams, based on the location of the specific base station;
   performing beam sweeping on the N candidate beams.

2. The method of claim 1,
   wherein the N is 3.

3. The method of claim 1, further comprising:
   performing measurement for the specific base station, based on the beam sweeping.

4. The method of claim 1,
   wherein the specific base station is a satellite for NTN (Non-Terrestrial Networks) communication.

5. The method of claim 4, further comprising:

   receiving, from the serving base station, a handover command to the specific base station;
   performing measurement for the specific base station, based on the beam sweeping;
   performing handover to the specific base station, based on the measurement.

6. The method of claim 1,

   wherein the UE is a UE for ATG (Air to Ground) communication,
   wherein the specific base station is a ground base station.

7. The method of claim 6, further comprising:

   receiving, from the serving base station, a handover command to the specific base station;
   performing measurement for the specific base station, based on the beam sweeping;
   performing handover to the specific base station, based on the measurement.

8. The method of claim 6, further comprising:

   performing cell measurement of the specific base station for cell reselection, based on the beam sweeping,
   wherein the UE is in IDLE or INACTIVE mode,
   wherein the cell measurement is performed, based on the N,
   wherein the N is 3.

**9.** The method of claim 6,

wherein the antenna of the UE is configured array antenna,
wherein the capability includes information that the antenna of the UE is configured array antenna.

**10.** The method of claim 4,
wherein the capability includes information that the UE is able to perform electronic steering by adjusting phase of the antenna.

**11.** A User Equipment (UE), to perform communication, comprising:

a transceiver; and
a processor,
wherein the processor performs operation comprising:

transmitting, to a serving base station, capability of the UE;
wherein the capability includes information that an antenna of the UE is a directional antenna,
receiving, from the serving base station, information on location of a specific base station;
determining N candidate beams, based on the location of the specific base station;
performing beam sweeping on the N candidate beams.

**12.** The UE of claim 11,
wherein the N is 3.

**13.** The UE of claim 11, wherein the operation further comprising:
performing measurement for the specific base station, based on the beam sweeping.

**14.** The UE of claim 11,
wherein the specific base station is a satellite for NTN (Non-Terrestrial Networks) communication.

**15.** The UE of claim 14, wherein the operation further comprising:

receiving, from the serving base station, a handover command to the specific base station;
performing measurement for the specific base station, based on the beam sweeping;
performing handover to the specific base station, based on the measurement.

**16.** The UE of claim 11,

wherein the UE is a UE for ATG (Air to Ground) communication,
wherein the specific base station is a ground base station.

**17.** The UE of claim 16, wherein the operation further comprising:

receiving, from the serving base station, a handover command to the specific base station;
performing measurement for the specific base station, based on the beam sweeping;
performing handover to the specific base station, based on the measurement.

**18.** The UE of claim 16, wherein the operation further comprising:

performing cell measurement of the specific base station for cell reselection, based on the beam sweeping,
wherein the UE is in IDLE or INACTIVE mode,
wherein the cell measurement is performed, based on the N,
wherein the N is 3.

**19.** The UE of claim 16,

wherein the antenna of the UE is configured array antenna,
wherein the capability includes information that the antenna of the UE is configured array antenna.

**20.** The UE of claim 14,
wherein the capability includes information that the UE is able to perform electronic steering by adjusting phase of the antenna.

**21.** An apparatus in mobile communication, comprising:

at least one processor; and
at least one memory storing instructions and operably electrically connectable with the at least one processor, wherein, based on the instructions being operated by the at least one processor, the instructions perform operation comprising:

transmitting, to a serving base station, capability of the apparatus;
wherein the capability includes information that an antenna of the apparatus is a directional antenna,
receiving, from the serving base station, information on location of a specific base station;
determining N candidate beams, based on the location of the specific base station;
performing beam sweeping on the N candidate beams.

**22.** A non-volatile computer readable storage medium having recorded instructions, wherein the instructions, based on being executed by one or more processors, cause the one or more processors to perform operation comprising:

transmitting, to a serving base station, capability of a UE (User Equipment) comprising the non-volatile computer readable storage medium;
wherein the capability includes information that an antenna of the UE is a directional antenna,
receiving, from the serving base station, information on location of a specific base station;
determining N candidate beams, based on the location of the specific base station;
performing beam sweeping on the N candidate beams.

# FIG. 1

EP 4 693 934 A1

# FIG. 2

First Device (100)
- Transceiver (106)
- Processing Chip (101)
  - Processor (102)
  - Memory (104)
    - Software Code (105)
- Antenna (108)

Second Device (200)
- Transceiver (206)
- Processing Chip (201)
  - Processor (202)
  - Memory (204)
    - Software Code (205)
- Antenna (208)

# FIG. 3

# FIG. 4

# FIG. 5

Wavelength

Radio | Microwave | Infrared | Visible | Ultraviolet | X-Ray | Gamma-Ray

$10^8$ m  1m  10mm  1mm  0.1mm  700nm  390nm  10nm  0.01nm

mmWave | Terahertz

Radiation Type

Frequency

3 Hz  300 MHz  30 GHz  300 GHz  3 THz  430 THz  730 THz  30 PHz  30 EHz

Mega : $10^6$  Giga : $10^9$  Tera : $10^{12}$  Peta : $10^{15}$  Exa : $10^{18}$

# FIG. 6

□ DL OR UL

FREQUENCY

RB INDEX

5 4 3 2 1 0

SYMBOL INDEX
0 1 2 3 4 5 6 7 8 9 10 11 12 13

One TTI

▨ : DL CONTROL CHANNEL      ▦ : UL CONTROL CHANNEL

EP 4 693 934 A1

# FIG. 7

SS burst

SS burst period

SS block

time

# FIG. 8

# FIG. 9

Satellite
(or UAS platform)

Service
link

Feeder link

Gateway

Data network

User
Equipments

Beam foot
print

Field of view of the satellite
(or UAS platform)

EP 4 693 934 A1

# FIG. 10

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

EP 4 693 934 A1

# FIG. 11

# FIG. 12

FIG. 13

Data Network

Data Network

N6

N6

5G CN

5G CN

NG

NG-RAN

NTN Gateway

NTN Gateway

NG over SRI

NG over SRI

Xn (over ISL)

NR Uu

NR Uu

UE

UE

# FIG. 14

GSO/NGSO

Direction based on NTN UE(L-ESIM)
and satellite position

L-ESIM

# FIG. 15

EP 4 693 934 A1

# FIG. 16

1. transmitting, to a serving base station,
capability of the UE

2. receiving, from the serving base station,
information on location of a specific base station

3. determining N candidate beams,
based on the location of the specific base station

4. performing beam sweeping on
the N candidate beams

## INTERNATIONAL SEARCH REPORT

| International application No. |
| --- |
| **PCT/KR2024/003083** |

| **A.** | **CLASSIFICATION OF SUBJECT MATTER** |
| --- | --- |

**H04B 7/06**(2006.01)i; **H04W 8/24**(2009.01)i; **H04W 24/08**(2009.01)i; **H04W 36/08**(2009.01)i; **H04W 36/00**(2009.01)i; **H04W 48/20**(2009.01)i; **H04W 64/00**(2009.01)i; **H04W 84/06**(2009.01)i

According to International Patent Classification (IPC) or to both national classification and IPC

| **B.** | **FIELDS SEARCHED** |
| --- | --- |

Minimum documentation searched (classification system followed by classification symbols)

H04B 7/06(2006.01); H01Q 25/02(2006.01); H01Q 3/26(2006.01); H04M 1/00(2006.01); H04W 36/00(2009.01); H04W 36/06(2009.01); H04W 36/32(2009.01); H04W 60/04(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 스위핑(beam sweeping), UE 능력(capability), 지향성(directional), 후보(candidate) 빔(beam), 핸드오버(handover)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | KR 10-2022-0139306 A (QUALCOMM INCORPORATED) 14 October 2022 (2022-10-14) See paragraphs [0026], [0072]-[0073], [0090]-[0099], [0111]-[0112] and [0124]-[0131]; claims 1 and 3-4; and figures 4 and 6. | 1-22 |
| Y | KR 10-2015-0095503 A (ELECTRONICS AND TELECOMMUNICATIONS RESEARCH INSTITUTE) 21 August 2015 (2015-08-21) See paragraphs [0004], [0017], [0034] and [0043]; claims 1, 3 and 10; and figure 1. | 1-22 |
| A | KR 10-0608468 B1 (MOTOROLA INC.) 09 August 2006 (2006-08-09) See paragraphs [0009]-[0132]. | 1-22 |
| A | US 2007-0202921 A1 (STERN-BERKOWITZ, Janet et al.) 30 August 2007 (2007-08-30) See paragraphs [0014]-[0078]. | 1-22 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2024** | **03 June 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003083** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2020-0071004 A (ELECTRONICS AND TELECOMMUNICATIONS RESEARCH INSTITUTE) 18 June 2020 (2020-06-18) See paragraphs [0047]-[0095]; and figures 2-6. | 1-22 |

Form PCT/ISA/210 (second sheet) (July 2022)

## INTERNATIONAL SEARCH REPORT
### Information on patent family members

International application No.

**PCT/KR2024/003083**

| Patent document cited in search report | | | Publication date (day/month/year) | Patent family member(s) | | | Publication date (day/month/year) |
|---|---|---|---|---|---|---|---|
| KR | 10-2022-0139306 | A | 14 October 2022 | CN | 115004578 | A | 02 September 2022 |
| | | | | EP | 4101083 | A1 | 14 December 2022 |
| | | | | US | 2021-0250816 | A1 | 12 August 2021 |
| | | | | US | 2023-0276309 | A1 | 31 August 2023 |
| | | | | WO | 2021-158315 | A1 | 12 August 2021 |
| KR | 10-2015-0095503 | A | 21 August 2015 | | None | | |
| KR | 10-0608468 | B1 | 09 August 2006 | CN | 1256803 | A | 14 June 2000 |
| | | | | EP | 0956612 | A1 | 17 November 1999 |
| | | | | JP | 2001-507917 | A | 12 June 2001 |
| | | | | US | 06061023 | A | 09 May 2000 |
| | | | | WO | 99-23718 | A1 | 14 May 1999 |
| US | 2007-0202921 | A1 | 30 August 2007 | CN | 101107867 | A | 16 January 2008 |
| | | | | CN | 1914935 | A | 14 February 2007 |
| | | | | EP | 1719353 | A2 | 08 November 2006 |
| | | | | EP | 1719358 | A1 | 08 November 2006 |
| | | | | JP | 2007-521782 | A | 02 August 2007 |
| | | | | JP | 2007-521783 | A | 02 August 2007 |
| | | | | KR | 10-2006-0108774 | A | 18 October 2006 |
| | | | | KR | 10-2006-0111711 | A | 27 October 2006 |
| | | | | US | 2005-0176385 | A1 | 11 August 2005 |
| | | | | US | 2005-0176469 | A1 | 11 August 2005 |
| | | | | WO | 2005-076970 | A2 | 25 August 2005 |
| | | | | WO | 2005-079081 | A1 | 25 August 2005 |
| KR | 10-2020-0071004 | A | 18 June 2020 | KR | 10-2020-0067091 | A | 11 June 2020 |
| | | | | US | 2020-0178135 | A1 | 04 June 2020 |

Form PCT/ISA/210 (patent family annex) (July 2022)